# FASCICULE DE BREVET EUROPEEN

(11) **EP 1 625 987 B1**
(45) Date de publication et mention de la délivrance du brevet: **31.10.2007**
(21) Numéro de dépôt: 05015280.0
(22) Date de dépôt: 14.07.2005
(51) Int. Cl.: B60T 11/26, B60T 17/06, B60T 13/14

(54) **Moyen d'obturation d'un reservoir hydraulique , reservoir, et procede de montage**
Hydraulikbehälter-Verschlussvorrichtung, Hydraulikbehälter mit Verschlussvorrichtung, und Verfahren zur Montage
Hydraulic reservoir cover seal, reservoir with such a cover, and methods of assembling such a cover

(30) Priorité: 09.08.2004 FR 0408779
(43) Date de publication de la demande: 15.02.2006
(73) Titulaire: ROBERT BOSCH GMBH, 70442 Stuttgart (DE)
(72) Inventeur: Lopez da Cruz, Nicolas, 93600 Aulnay Sous Bois (FR); Beaures D'Augeres, Olivier, 75020 Paris (FR); Justaman, Aurélien, 93190 Livry Gargan (FR); Lenczner, Sylvain, 75020 Paris (FR); L'Aot, Jean-Michel, 93200 Saint-Denis (FR)
(74) Mandataire: Hurwic, Aleksander Wiktor

(56) Documents cités:
- EP-A- 0 376 768
- FR-A- 2 824 123
- US-A- 5 277 327
- US-B1- 6 298 961

## Description

L'invention concerne un moyen d'obturation d'un réservoir hydraulique pour véhicule automobile. Plus précisément l'invention concerne un moyen d'obturation muni d'un bouchon et d'un plongeur, le bouchon et le plongeur étant fixés l'un à l'autre de manière étanche. L'invention concerne également un procédé de montage d'un tel moyen d'obturation.

US-A-5277 327 décrit un bouchon de réservoir comportant, disposé dans une gorge, un joint présentant en coupe, un profil en X.

Dans les véhicules automobiles, certains réservoirs hydrauliques sont munis d'un dispositif électrique. Ce dispositif permet par exemple de connaître un niveau de liquide dans le réservoir. Il peut en être ainsi, par exemple, pour les réservoirs de liquide de frein, ou les réservoirs de carburant. On peut par exemple intégrer le dispositif de mesure du niveau de liquide dans un bouchon de réservoir. Ainsi, certains bouchons sont munis, sur une face dirigée vers une goulotte de remplissage, d'un plongeur. Le plongeur, généralement une tige cylindrique, est immergé dans le liquide du réservoir hydraulique lorsque le bouchon est mis en place sur la goulotte de remplissage. Le plongeur contient par exemple un circuit électrique, relié à un tableau de bord du véhicule. Un flotteur est monté coulissant le long du plongeur. Le flotteur peut être muni d'un aimant qui ouvre ou ferme le circuit électrique contenu dans le plongeur, selon sa position sur le dit plongeur. Par exemple, lorsque le flotteur atteint une position basse sur le plongeur, correspondant à un niveau critique de liquide dans le réservoir, son aimant ferme le circuit électrique contenu dans le plongeur. Un voyant lumineux s'allume alors sur le tableau de bord. Un conducteur est ainsi informé de la nécessité de remplir le réservoir.

Un corps d'un plongeur d'un tel moyen d'obturation de réservoir de liquide hydraulique, contenant un circuit électrique, doit être parfaitement étanche. En effet, aucun liquide ne doit pénétrer dans le corps du plongeur, au risque sinon de court-circuité le circuit électrique.

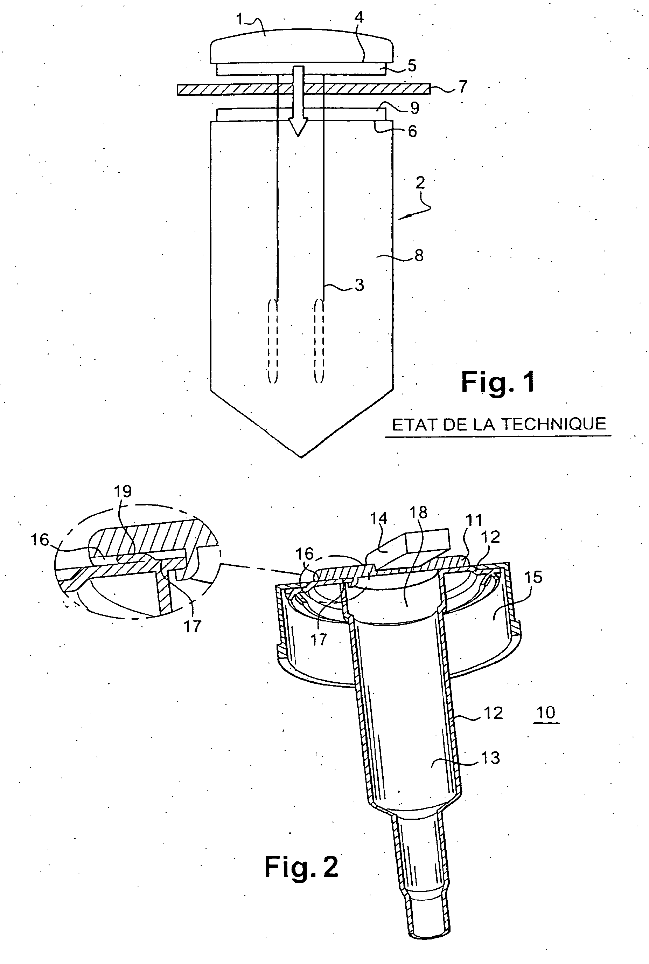

On connaît dans l'état de la technique, et tel que représenté sur la figure 1, un dispositif de fixation étanche du bouchon sur le plongeur utilisant la technique du miroir chauffant. Un bouchon 1 comporte par exemple un connecteur. Un plongeur 2 est muni d'un circuit électrique 3. Le circuit électrique 3 est logé dans une cavité 8 ménagée dans un corps du plongeur 2. Une face inférieure 4 du bouchon 1 est munie d'un trottoir 5. Une face supérieure 6 du plongeur 2 est munie d'un trottoir 9. Par face inférieure 4 du bouchon 1, on entend face dirigée vers le plongeur 2. Par face supérieure du plongeur 2, on entend face dirigée vers le bouchon 1. On dispose un miroir chauffant 7 entre le trottoir 5 du bouchon 1 et le trottoir 9 du plongeur 2. Les trottoirs 5 et 9 sont en matière plastique. Le miroir chauffant 7 comprend des résistances dirigées d'une part face au trottoir 5 du bouchon 1 et d'autre part face au trottoir 9 du plongeur 2. Le miroir chauffant 7 ramollit le plastique des trottoirs 5 et 9. On retire alors le miroir chauffant 7, et on colle la face inférieure 4 du bouchon 1 contre la face supérieure 6 du plongeur 2. Les deux faces 4 et 6 sont soudées de manière étanche.

Un inconvénient d'un tel dispositif de fixation est qu'il nécessite l'utilisation de nombreux moules supplémentaires. En effet, il est nécessaire d'utiliser d'une part des moules pour fabriquer le bouchon 1 et le plongeur 2, et d'autre part des moules pour maintenir le bouchon 1, le plongeur 2 et le miroir chauffant 7 les uns par rapport aux autres au moment du chauffage. Il s'ensuit donc un coût supplémentaire à la fabrication et une perte de temps importante.

Par ailleurs, l'apport calorifique nécessaire à la soudure entraîne un risque important de casse du circuit électrique contenu dans le plongeur.2.

Dans l'invention, on cherche à résoudre les problèmes énoncés ci-dessus en proposant un bouchon de réservoir hydraulique fixé de manière étanche à un plongeur muni d'un circuit électrique, l'étanchéité étant assurée sans soudure.

Le principe de l'invention repose sur une lèvre d'étanchéité disposée entre une face inférieure du bouchon d'une part et une face supérieure du plongeur d'autre part. Cette lèvre d'étanchéité est écrasée lors de l'application du bouchon sur le plongeur. Un dispositif de fixation du bouchon sur le plongeur permet de maintenir de façon fixe et irréversible la lèvre écrasée. Cet écrasement assure une étanchéité d'une cavité du plongeur. C'est-à-dire qu'aucun liquide ne peut pénétrer à l'intérieur du corps du plongeur, une fois le bouchon fixé au plongeur.

La soudure de l'état de la technique est remplacée, dans l'invention, par une mise sous pression et un écrasement de la lèvre d'étanchéité entre le bouchon et le plongeur. Le dispositif de fixation est par exemple muni d'un système à baïonnette. Il est également possible que le dispositif de fixation soit muni d'un système à clip.

Le dispositif de l'invention supprime, en même temps que l'opération de soudure, les moules supplémentaires. En effet, le dispositif de fixation du bouchon sur le plongeur fait partie intégrante du moyen d'obturation lui-même. Le dispositif de fixation appartient d'une part au bouchon et d'autre part au plongeur. Les pièces du dispositif de fixation sont moulées sur le bouchon et le plongeur lors de la fabrication de ces deux pièces. Il s'ensuit un gain de temps et un coût de fabrication moindre.

Par ailleurs, aucun apport calorifique étant nécessaire, le risque d'endommager le circuit électrique contenu dans le plongeur, notamment du fait d'une chaleur élevée, est éliminé.

L'invention concerne également des procédés de fabrication des moyens d'obturation de l'invention.

L'invention a donc pour objet un moyen d'obturation d'un réservoir hydraulique comprenant
- un bouchon,
- une jupe munie d'une cavité,
- un dispositif de fixation du bouchon sur la jupe, ledit dispositif assurant une étanchéité à l'intérieur de la cavité de la jupe,
caractérisé en ce que le dispositif de fixation est muni d'au moins une lèvre d'étanchéité, ladite lèvre étant maintenue écrasée entre une face inférieure du bouchon et une face supérieure de la jupe.

Dans un exemple de réalisation particulier de l'invention, la lèvre d'étanchéité suit un pourtour d'un orifice situé sur la face supérieure de la jupe. Il est également possible de réaliser la lèvre d'étanchéité sur le bouchon. Par exemple, la lèvre d'étanchéité suit un contour d'une face du bouchon dirigée vers la jupe.

La lèvre d'étanchéité peut être inclinée vers l'extérieur, ou vers l'intérieur par rapport à l'orifice. Il est également possible de prévoir deux lèvres d'étanchéité, une première lèvre étant inclinée vers l'extérieur par rapport à l'orifice, une deuxième lèvre étant inclinée vers l'intérieur par rapport à l'orifice.

Selon un premier mode de réalisation de l'invention, le dispositif de fixation est muni d'au moins une accroche sur la face inférieure du bouchon, ladite accroche étant encliquetée élastiquement sur une paroi interne de la cavité de la jupe.

Selon un second mode de réalisation de l'invention, le dispositif de fixation est muni d'au moins une accroche sur la face inférieure du bouchon, ladite accroche se fixant par baïonnette sur une paroi interne de la cavité de la jupe.

L'invention a également pour objet un premier procédé de montage d'un moyen d'obturation, caractérisé en ce qu'il comporte les étapes
- on moule une jupe et un bouchon, une lèvre d'étanchéité étant moulée sur une face supérieure de la jupe ou sur une face inférieure du bouchon,
- on introduit un circuit ILS dans une cavité de la jupe,
- on rapproche le bouchon et la jupe,
- on solidarise le bouchon et la jupe par encliquetage.

L'invention a également pour objet un second procédé de montage d'un moyen d'obturation, caractérisé en ce qu'il comporte les étapes
- on moule une jupe et un bouchon, une lèvre d'étanchéité étant moulée sur une face supérieure de la jupe ou sur une face inférieure du bouchon,
- on introduit un circuit ILS dans une cavité de la jupe,
- on rapproche le bouchon et la jupe,
- on solidarise le bouchon et la jupe par rotation.

L'invention sera mieux comprise à lecture de la description qui suit et à l'examen des figures qui l'accompagnent. Celles-ci ne sont présentées qu'à titre indicatif et nullement limitatif de l'invention. Les figures montrent :
- Figure 2: Une coupe transversale d'un moyen d'obturation de l'invention selon un exemple particulier de réalisation ;
- Figure 3 : Une représentation partielle d'un moyen d'obturation de l'invention selon un autre exemple de réalisation ;
- Figure 4 : Une coupe transversale d'une jupe du moyen d'obturation de la figure 2 ;
- Figure 5 : Une représentation d'une face inférieure d'un bouchon selon une exemple particulier de réalisation de l'invention ;
- Figure 6 (a et b) : Une représentation d'un exemple de réalisation d'un dispositif de fixation de l'invention.

Sur la figure 2, on peut voir un moyen d'obturation 10 selon un exemple particulier de réalisation de l'invention. Un bouchon 11 est fixé solidairement à une jupe 12. La jupe 12 est munie d'une cavité 13. Dans la cavité 13 peut être introduit, par exemple, un circuit électrique tel qu'un circuit ILS (non représenté). Par circuit ILS, on entend circuit muni d'un interrupteur à lames souples. Un dispositif de fermeture 15 peut être fixé sur une extrémité haute 17 de la jupe 12. Une pièce cylindrique 15, formant le dispositif de fermeture 15, est munie sur une paroi interne d'un pas de vis. La pièce cylindrique 15 peut ainsi être vissée sur une goulotte de remplissage d'un réservoir hydraulique (non représentés).

Une lèvre d'étanchéité 19 (visible sur l'agrandissement de la figure 2) est écrasée entre une face inférieure 16 du bouchon 11 et la face supérieure, ou extrémité haute, 17 de la jupe 12. Par face inférieure 16 du bouchon 11, on entend face dirigée vers la jupe 12. Par face supérieure de la jupe 12 on entant face dirigée vers le bouchon 11. Par exemple, la lèvre d'étanchéité fait partie intégrante de la face supérieure 17 de la jupe 12. La lèvre d'étanchéité peut par exemple suivre un pourtour d'un orifice 18 de la jupe 12. L'orifice 18 de la jupe 12 débouche dans la cavité 13 de la jupe 12. La lèvre d'étanchéité est moulée en même temps que la jupe 12. Il est également possible, dans un autre exemple de réalisation de l'invention, de mouler la lèvre d'étanchéité sur la face inférieure 16 du bouchon 11.

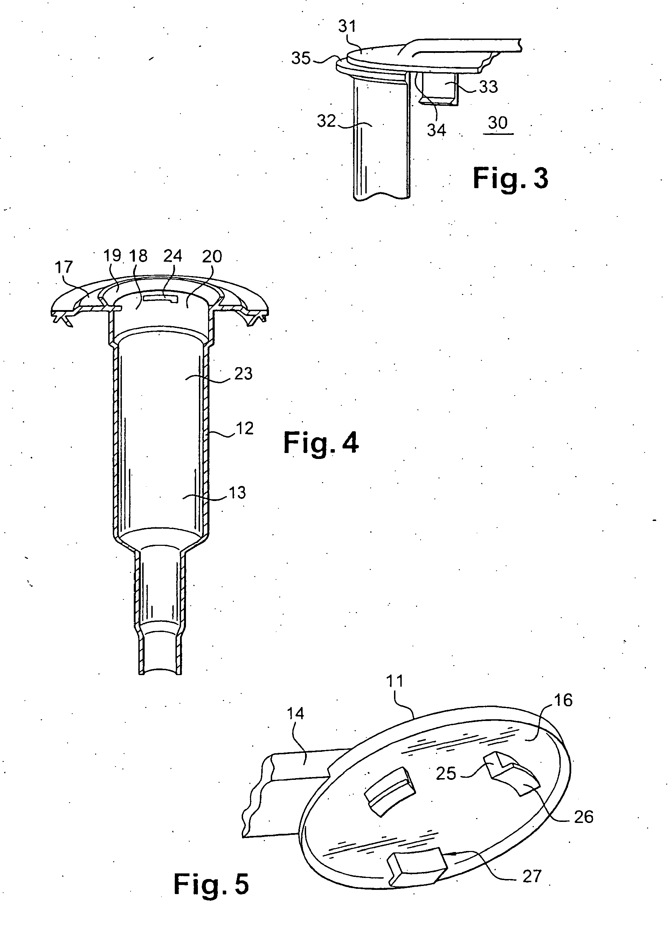

Sur la figure 4, on peut voir la jupe 12 sans le bouchon 11 et le dispositif de fermeture 15. La lèvre d'étanchéité 19 suit le pourtour de l'orifice 18. La lèvre 19 est inclinée vers l'extérieur par rapport à un centre de l'orifice 18. La lèvre 19 peut à l'inverse être inclinée vers l'intérieur par rapport à l'orifice 18.

Une extrémité haute 20 d'une paroi interne 21 de la cavité 13 de la jupe 12 est munie d'au moins une protubérance 24 appartenant à un dispositif de fixation du bouchon 11 sur la jupe 12. Dans l'exemple de réalisation décrit ici les protubérances 24 permettent une fermeture par baïonnette du bouchon 11 sur la jupe 12.

Sur la figure 5, on peut voir la face inférieure 16 du bouchon 11 munie d'accroches 27. Les accroches 27 appartiennent au dispositif de fixation du bouchon 11 sur la jupe 12. Par exemple, la face inférieure 16 du bouchon 11 est munie de trois accroches 27, réparties régulièrement sur un périmètre de la face interne 16. Les accroches 27 sont, par exemple, en formes d'équerres. Une première barre 25 de chaque équerre 27 a une extrémité haute fixée à la face interne 16 du bouchon 11. La première barre 25 s'étend axialement par rapport à un axe de la face interne 16. Une seconde barre 26 a une extrémité fixée à une extrémité basse de la barre 25. La deuxième barre 26 s'étend vers l'extérieur, parallèlement à la surface plane 16.

Lors de la fixation du bouchon 11 sur la jupe 12, la face inférieure 16 du bouchon 11 est écrasée contre la lèvre d'étanchéité 19. Une rotation, ici d'un tiers de tour, du bouchon 11 par rapport à la jupe 12 permet de faire glisser la deuxième barre 26 de la protubérance 27 sous la protubérance 24 de la jupe 12.

Il est possible de prévoir plus ou moins de protubérances 24 sur la jupe 12 et d'accroches 27 sur le bouchon 11. Cependant, pour avoir une fixation sûre du bouchon 11 sur la jupe 12, au moins deux protubérances 27 et deux protubérances 24 sont nécessaires. Un écartement entre les protubérances 27 sur la face interne 16 du bouchon 11 doit être en concordance avec un écartement entre les protubérances 24 sur la jupe 12.

De manière préférée, ce dispositif de fermeture par baïonnette est irréversible. Par irréversible, on entend qu'une fois le bouchon 11 fixé sur la jupe 12, il n'est plus possible de les séparer. Une tentative dans ce sens entraîne une casse irréparable du moyen d'obturation. Cette fermeture par baïonnette permet de mettre sous contrainte et en écrasement la lèvre d'étanchéité 19. L'étanchéité à l'intérieur de la cavité 13 de la jupe 12 est ainsi assurée.

Sur la figure 3 on peut voir un moyen d'obturation 30 d'un réservoir hydraulique selon un autre exemple de réalisation de l'invention. Un bouchon 31 est fixé solidairement à une jupe 32. Une accroche 33 d'un dispositif de fixation. L'accroche 33, visible partiellement sur la figure 3, est située sur une face inférieure 34 du bouchon 31. La face inférieure 34 du bouchon 31 est accolée contre une face supérieure 35 de la jupe 32. Une lèvre d'étanchéité (non visible sur la figure 3) est écrasée entre la face inférieure 34 du bouchon 31 et la face supérieure 35 de la jupe 32.

Sur la figure 6a on peut voir un agrandissement du bouchon 31. La face inférieure 34 est muni de l'accroche 33. L'accroche 33 a par exemple une forme circulaire cylindrique. L'accroche 33 s'étend radialement par rapport à une surface plane de la face inférieure 34.

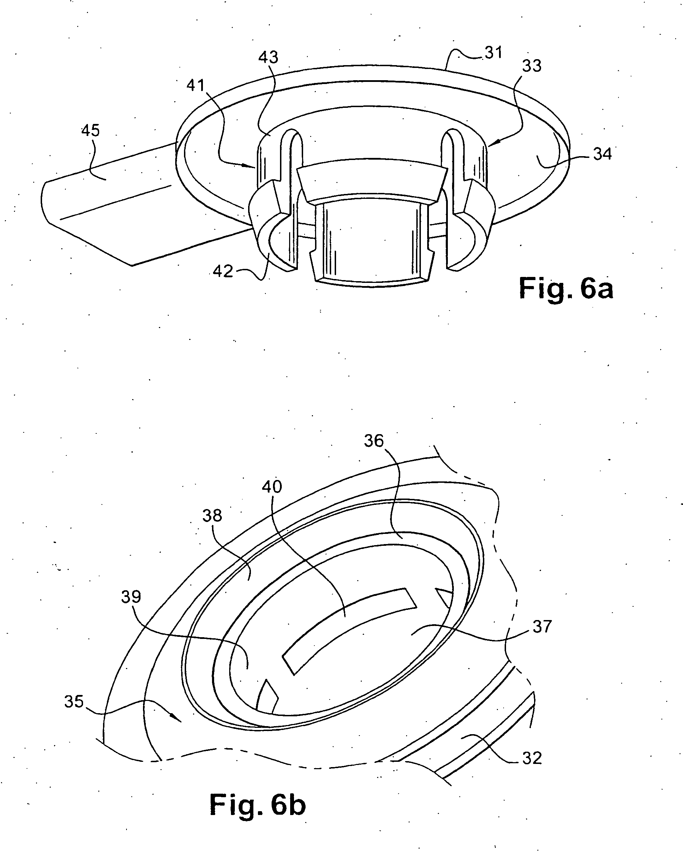

Sur la figure 6b, on peut voir une représentation partielle d'une vue de dessus de la jupe 32. La jupe 32 est munie d'un orifice 36 débouchant dans une cavité 37. Une lèvre d'étanchéité 38 suit un pourtour de l'orifice 36. La lèvre d'étanchéité 38 est inclinée vers l'extérieur par rapport à l'orifice 36. Elle peut également être dirigée vers l'intérieur.

Dans un autre exemple de réalisation, on peut mouler la lèvre d'étanchéité 38 sur la face inférieure 34 du bouchon 31.

Des orifices 40 sont ménagés sur une paroi interne 39 de la cavité 37. Les orifices 40 sont répartis sur un périmètre de la paroi circulaire 39.

L'accroche 33 (figure 6a) est par exemple divisée en quatre parties 41. Les quatre parties 41 sont indépendantes les unes des autres à l'endroit d'une extrémité basse 42, et reforment le cylindre 33 à l'endroit d'une extrémité haute 43. Dans ce cas, la paroi interne 39 de la jupe 32 est munie de quatre orifices 40, répartis avec la même régularitée sur la paroi 39, que les extrémités basses 42 sur l'accroche 33. Les extrémités basses 42 de l'accroche 33 viennent se clipser dans les orifices 40. La face inférieure 34 du bouchon 31 écrase alors la lèvre d'étanchéité 38 contre la face supérieure 35 de la jupe 32. Aucun liquide ne peut plus pénétrer dans la cavité 37 de la jupe 32.

Il est possible de prévoir, à la place d'une unique lèvre d'étanchéité, deux lèvres d'étanchéité. Une première lèvre d'étanchéité peut être inclinée vers l'extérieur par rapport à l'orifice débouchant dans la cavité de la jupe. La seconde lèvre est alors dirigée vers l'intérieur de ce même orifice. Un dispositif de fermeture muni de deux lèvres d'étanchéité peut avantageusement être utilisé lorsque la face inférieure du bouchon présente sur toute une partie de sa surface écrasant les lèvres d'étanchéité, un profil bombé.

Il est également possible de maintenir le bouchon sur la jupe par vissage du bouchon sur la jupe. Par exemple, le bouchon est muni sur sa face inférieure d'une protubérance cylindrique munie d'un pas de vis. La protubérance est introduite dans la cavité de la jupe. L'extrémité haute de la jupe est également munie sur la paroi interne d'un pas de vis. Le bouchon est fixé à la jupe par rotation.

Dans un exemple de réalisation particulier de l'invention, le connecteur 14 est un connecteur ILS. Le circuit électrique associé, logé dans la cavité de la jupe cylindrique est un circuit ILS.

Un flotteur peut être monté coulissant le long de la jupe cylindrique. Le flotteur est par exemple muni d'un aimant. L'aimant permet d'ouvrir ou fermer le circuit ILS. Par exemple, lorsque le flotteur est dans une position haute sur la jupe du moyen d'obturation, le système ILS est ouvert. Lorsque le flotteur est en position basse sur la jupe, position correspondant à un niveau critique de liquide dans le réservoir, le circuit ILS est fermé. Un voyant lumineux s'allume alors sur le tableau de bord du véhicule. Le voyant lumineux signal au conducteur qu'il est nécessaire de remplir le réservoir hydraulique.

La réalisation de l'étanchéité via le dispositif de fixation du moyen d'obturation de l'invention est aisée et sûre. Le circuit électrique contenu dans la jupe du moyen d'obturation est protégé d'une part des risques de casse lors de la fixation du bouchon sur la jupe, et d'autre part de l'humidité dans le réservoir.

Le dispositif de fixation de l'invention, comprenant la lèvre d'étanchéité, les accroches et les protubérances, est moulé sur la jupe et le bouchon en même temps que ces deux pièces.

L'invention concerne également un premier procédé de montage du moyen d'obturation, caractérisé en ce qu'il comporte les étapes :
- on moule la jupe 12 et le bouchon 11, la lèvre d'étanchéité 19 étant moulée sur la face supérieure 17 de la jupe 12 ou sur la face inférieure 16 du bouchon 11,
- on introduit un circuit ILS dans la cavité 13 de la jupe 12,
- on rapproche le bouchon 11 et la jupe 12,
- on solidarise le bouchon 11 et la jupe 12 par encliquetage.

L'invention concerne aussi un second procédé de montage du moyen d'obturation, caractérisé en ce qu'il comporte les étapes :
- on moule la jupe 32 et le bouchon 31, la lèvre d'étanchéité 38 étant moulée sur la face supérieure 35 de la jupe 32 ou sur la face inférieure 34 du bouchon 31,
- on introduit un circuit ILS dans la cavité 37 de la jupe 32,
- on rapproche le bouchon 31 et la jupe 32,
- on solidarise le bouchon 31 et la jupe 32 par rotation.

La solidarisation du bouchon 31 et de la jupe 32 par rotation peut être faite via un dispositif à baïonnette, ou par un dispositif de vissage.

## Revendications

1. Moyen d'obturation d'un réservoir hydraulique comprenant
- un bouchon (11, 31),
- un plongeur,
- une jupe (12, 32) munie d'une cavité (13, 37),
- un dispositif de fixation du bouchon sur la jupe, ledit dispositif assurant une étanchéité dans la cavité de la jupe,
**caractérisé en ce que** le dispositif de fixation est muni d'au moins une lèvre d'étanchéité (19, 38), ladite lèvre étant maintenue écrasée entre une face inférieure (16, 34) du bouchon et une face supérieure (17, 35) de la jupe.

2. Moyen d'obturation selon la revendication 1, **caractérisé en ce que** la lèvre d'étanchéité suit un pourtour d'un orifice (18, 36) situé sur la face supérieure de la jupe.

3. Moyen d'obturation selon la revendication 2, **caractérisé en ce que** la lèvre d'étanchéité est inclinée vers l'extérieur, ou vers l'intérieur par rapport à l'orifice.

4. Moyen d'obturation selon l'une des revendications 2 à 3, **caractérisé en ce que** le dispositif de fixation est muni de deux lèvres d'étanchéité, une première lèvre étant inclinée vers l'extérieur par rapport à l'orifice, une deuxième lèvre étant inclinée vers l'intérieur par rapport à l'orifice.

5. Moyen d'obturation selon l'une des revendications 1 à 4, **caractérisé en ce que** le dispositif de fixation est muni d'au moins une accroche (33) sur la face inférieure du bouchon, ladite accroche étant agrafée élastiquement sur une paroi interne (39) de la cavité de la jupe.

6. Moyen d'obturation selon l'une des revendications 1 à 4, **caractérisé en ce que** le dispositif de fixation est muni d'au moins une accroche (27) sur la face inférieure du bouchon, ladite accroche se fixant par baïonnette sur une paroi interne (20) de la cavité de la jupe.

7. Moyen d'obturation selon l'une quelconque des revendications 1 à 6, **caractérisé en ce que** le dispositif de fixation est irréversible.

8. Moyen d'obturation selon l'une quelconque des revendications 1 à 7, **caractérisé en ce que** le bouchon est muni d'un connecteur, la cavité de la jupe contenant un circuit électrique associé.

9. Moyen d'obturation selon la revendication 8, **caractérisé en ce que** le connecteur est un connecteur ILS, et **en ce que** le circuit électrique est un circuit ILS.

10. Moyen d'obturation selon l'une quelconque des revendications 1 à 9, **caractérisé en ce que** le dispositif de fixation est moulé sur le bouchon et sur la jupe.

11. Réservoir hydraulique pour véhicule automobile, **caractérisé en ce qu'**il est muni d'un moyen d'obturation selon l'une quelconque des revendications 1 à 10.

12. Procédé de montage d'un moyen d'obturation selon la revendication 5, **caractérisé en ce qu'**il comporte les étapes
- on moule la jupe et le bouchon, la lèvre d'étanchéité étant moulée sur la face supérieure de la jupe ou sur la face inférieure du bouchon,
- on introduit un circuit ILS dans la cavité de la jupe,
- on rapproche le bouchon et la jupe,
- on solidarise le bouchon et la jupe par encliquetage.

13. Procédé de montage d'un moyen d'obturation selon la revendication 6, **caractérisé en ce qu'**il comporte les étapes
- on moule la jupe et le bouchon, la lèvre d'étanchéité étant moulée sur la face supérieure de la jupe ou sur la face inférieure du bouchon,
- on introduit un circuit ILS dans la cavité de la jupe,
- on rapproche le bouchon et la jupe,
- on solidarise le bouchon et la jupe par rotation.

## Claims

1. Means for sealing a hydraulic reservoir, comprising
- a cap (11, 31),
- an immersion device,
- a skirt (12, 32) equipped with a cavity (13, 37),
- a fastening device for attaching the cap to the skirt, the said device providing sealing in the cavity of the skirt,
**characterized in that** the fastening device is equipped with at least one sealing lip (19, 38) the said lip being kept crushed between an underside (16, 34) of the cap and an upper face (17, 35) of the skirt.

2. Sealing means according to Claim 1, **characterized in that** the sealing lip follows a periphery of an orifice (18, 36) situated on the upper face of the skirt.

3. Sealing means according to Claim 2, **characterized in that** the sealing lip is inclined outwards, or inwards with respect to the orifice.

4. Sealing means according to one of Claims 2 to 3, **characterized in that** the fastening device is equipped with two sealing lips, a first lip being inclined outwards with respect to the orifice, a second lip being inclined inwards with respect to the orifice.

5. Sealing means according to one of Claims 1 to 4, **characterized in that** the fastening device is equipped with at least one catch (33) on the underside of the cap, the said catch being clipped elastically onto an internal wall (39) of the cavity of the skirt.

6. Sealing means according to one of Claims 1 to 4, **characterized in that** the fastening device is equipped with at least one catch (27) on the underside of the cap, the said catch being attached to an internal wall (20) of the cavity of the skirt as a bayonet-type mounting.

7. Sealing means according to any one of Claims 1 to 6, **characterized in that** the fastening device is irreversible.

8. Sealing means according to any one of Claims 1 to 7, **characterized in that** the cap is equipped with a connector, the cavity of the skirt containing an associated electric circuit.

9. Sealing means according to Claim 8, **characterized in that** the connector is an ILS connector and **in that** the electric circuit is an ILS circuit.

10. Sealing means according to any one of Claims 1 to 9, **characterized in that** the fastening device is moulded on the cap and on the skirt.

11. Hydraulic reservoir for a motor vehicle, **characterized in that** it is equipped with a sealing means according to any one of Claims 1 to 10.

12. Method of assembling a sealing means according to Claim 5, **characterized in that** it involves the following steps:
- the skirt and the cap are moulded, the sealing lip being moulded on the upper face of the skirt or on the underside of the cap,
- an ILS circuit is introduced into the cavity of the skirt,
- the cap and the skirt are brought closer together,
- the cap and the skirt are connected by clipping them together.

13. Method of assembling a sealing means according to Claim 6, **characterized in that** it involves the following steps:
- the skirt and the cap are moulded, the sealing lip being moulded on the upper face of the skirt or on the underside of the cap,
- an ILS circuit is introduced into the cavity of the skirt,
- the cap and the skirt are brought closer together,
- the cap and the skirt are connected by rotating them.

## Patentansprüche

1. Mittel zum Verschließen eines Hydraulikbehälters, mit
- einem Stopfen (11, 31),
- einem Stößel,
- einer mit einem Hohlraum (13, 37) versehenen Schürze (12, 32),
- einer Einrichtung zur Befestigung des Stopfens an der Schürze, wobei die Einrichtung eine Dichtigkeit im Hohlraum der Schürze gewährleistet,
**dadurch gekennzeichnet, dass** die Befestigungseinrichtung mit mindestens einer Dichtlippe (19, 38) versehen ist, wobei die Lippe zwischen einer unteren Fläche (16, 34) des Stopfens und einer oberen Fläche (17, 35) der Schürze zusammengedrückt gehalten ist.

2. Verschlussmittel nach Anspruch 1, **dadurch gekennzeichnet, dass** die Dichtlippe einem Umfang einer Öffnung (18, 36) folgt, die an der oberen Fläche der Schürze ausgebildet ist.

3. Verschlussmittel nach Anspruch 2, **dadurch gekennzeichnet, dass** die Dichtlippe bezüglich der Öffnung nach außen oder nach innen abgeschrägt ist.

4. Verschlussmittel nach einem der Ansprüche 2 bis 3, **dadurch gekennzeichnet, dass** die Befestigungseinrichtung mit zwei Dichtlippen versehen ist, wobei eine erste Lippe bezüglich der Öffnung nach außen abgeschrägt ist und eine zweite Lippe bezüglich der Öffnung nach innen abgeschrägt ist.

5. Verschlussmittel nach einem der Ansprüche 1 bis 4, **dadurch gekennzeichnet, dass** die Befestigungseinrichtung an der unteren Fläche des Stopfens mit mindestens einem Halter (33) versehen ist, wobei der Halter an einer Innenwand (39) des Hohlraums der Schürze elastisch verhakt ist.

6. Verschlussmittel nach einem der Ansprüche 1 bis 4, **dadurch gekennzeichnet, dass** die Befestigungseinrichtung an der unteren Fläche des Stopfens mit mindestens einem Halter (27) versehen ist, wobei der Halter durch Bajonett-Verschluss an einer Innenwand (20) des Hohlraums der Schürze befestigt ist.

7. Verschlussmittel nach einem der Ansprüche 1 bis 6, **dadurch gekennzeichnet, dass** die Befestigungseinrichtung irreversibel ist.

8. Verschlussmittel nach einem der Ansprüche 1 bis 7, **dadurch gekennzeichnet, dass** der Stopfen mit einem Stecker versehen ist, wobei der Hohlraum der Schürze einen dazugehörigen Stromkreis enthält.

9. Verschlussmittel nach Anspruch 8, **dadurch gekennzeichnet, dass** der Stecker ein Reed-Stecker ist und der Stromkreis ein Kreis mit Reed-Schalter ist.

10. Verschlussmittel nach einem der Ansprüche 1 bis 9, **dadurch gekennzeichnet, dass** die Befestigungseinrichtung auf den Stopfen und auf die Schürze aufgeformt ist.

11. Hydraulikbehälter für ein Kraftfahrzeug, **dadurch gekennzeichnet, dass** er mit einem Verschlussmittel nach einem der Ansprüche 1 bis 10 ausgestattet ist.

12. Verfahren zum Anbringen eines Verschlussmittels nach Anspruch 5, **dadurch gekennzeichnet, dass** es die Schritte umfasst, bei denen
- die Schürze und der Stopfen geformt werden, wobei die Dichtlippe auf die obere Fläche der Schürze oder auf die untere Fläche des Stopfens geformt wird,
- ein Kreis mit Reed-Schalter in den Hohlraum der Schürze eingeführt wird,
- der Stopfen und die Schürze zusammengeschoben werden,
- der Stopfen und die Schürze durch Einrasten fest miteinander verbunden werden.

13. Verfahren zum Anbringen eines Verschlussmittels nach Anspruch 6, **dadurch gekennzeichnet, dass** es die Schritte umfasst, bei denen
- die Schürze und der Stopfen geformt werden, wobei die Dichtlippe auf die obere Fläche der Schürze oder auf die untere Fläche des Stopfens geformt wird,
- ein Kreis mit Reed-Schalter in den Hohlraum der Schürze eingeführt wird,
- der Stopfen und die Schürze zusammengeschoben werden,
- der Stopfen und die Schürze durch Drehung fest miteinander verbunden werden.
